# EUROPEAN PATENT APPLICATION

(11) **EP 2 706 765 A1**
(43) Date of publication of application: **12.03.2014**
(21) Application number: 12183438.6
(22) Date of filing: 07.09.2012
(51) Int. Cl.: H04W 4/08, H04L 29/08

(54) **Method to create and manage a group of devices by a management center**

(71) Applicant: Nagravision S.A., 1033 Cheseaux-sur-Lausanne (CH)
(72) Inventor: Singh, Gyanveer, 844504 Bihar (IN)
(74) Representative: Leman Consulting S.A.

(57) **Abstract**

The present invention concerns the field of telecommunication between devices, in particular to the creation of a group of devices for exchanging data.

It is then proposed a method to create and manage a group of devices by a management center, said method comprising the steps of :
- uploading to the management center from a first device, a device identification and a profile information, said profile information being selected among parameters including device type, computing capabilities, content accessed and generated by said device, activity performed on that device, compatible network type, user behaviour,
- comparing the profile information with profile information already provided by other devices,
- assigning said first device with a group having the most similar profile information.

## Description

### Introduction

The present invention concerns the field of telecommunication between devices, in particular to the creation of a group of devices for exchanging data.

### Background Art

There are increasing numbers of electronic devices connected through different network type to this cyber word so as to create groups related to some common interest. The electronic device's owner has an identification used to access this group. The group is selected by the user according to his preferences such as social activities, group of friends, group of professional relations etc.

Another parallel development is the last decade is social networking platform, but all of them portrait individual personal.

The proposed invention takes advantage of these two developments and provides a system and methods to create a social network of electronic devices.

### Brief description of the invention

The present invention provides a system and method of creating a network of electronic devices. This is achieved thanks to a method to create and manage a group of devices by a management center, said method comprising the steps of :
- uploading to the management center from a first device, a device identifier and a profile information, said profile information being selected among parameters including device type, computing capabilities, content accessed and generated by said device, activity performed on that device, compatible network type, user behaviour,
- comparing the profile information with profile information already provided by other devices,
- assigning said first device with a group having the most similar profile information.

By "cyber profile" it is meant all or part of a collection of data characterizing a device such as the physical characteristics of the device (memory, processor, size or resolution of the screen, manufacturer), the network on which the device is connected, the actual use of the device (number of messages sent, number of pictures or video taken, applications installed and used), location currently detected.

### Detailed description

A device profile can be created for the electronic devices participating to this group creation. We (users) can give a "cyber personality" or profile to electronic devices and that device may be known by a unique name and for its personality. The device profile/personality can be created based on the parameters which include but are not limited to device type (e.g. PDA, Mobile phone, I-Phone, I-Pad, STB, Digital TV, computer system, Laptop, palmtop, tablets, camera etc ), computing capabilities, content accessed and generated by it (Image, video, audio, text or other data), activity perform on that device, compatible network type, user behaviour, owners identification etc. Freedom to disclosure some of these features may be given to the users/owner of the device.

A single user may own multiple electronic devices and create a "cyber personality" for each of his device.

We propose a system and platform to create a social network of electric devices. This social network will enable the sharing/posting of multimedia contents accessible or generated by one electronic device with others. The content sharing can be limited to the electronic devices with similar profile/personality or may be open to all or may be defined group/authorized group by the owner of device. An access control mechanism may be put in place to avoid the sharing of copyrighted content. The system will have a networked accessible interface for :
Generating a "cyber profile" / "cyber personality" for electronic devices providing all or some of the details as cited above (process of profile creation may be automated through some APIs). The cyber profile is preferably generated locally on the device by gathering the specification of the device, the various tasks mostly used on the device and sent to the remote system.
Assigning a received "profile" with a group. For that purpose, the system verifies the other profiles received and clusters the profiles into groups. Each group represents a different profile type.
A discovery process to find out the online (or occasionally online) electronic devices
A search engine for finding out the electronic devices profile using different parameter defined during profile creation and its online activities.
A sub-module for sending offline/online friend/pairing request to other electronic devices.
This pairing can enable sharing of content between heterogeneous network such as connecting a mobile networks with STB network, connecting a mobile network with IP network etc. The sub-module provides systems and methods of pairing the electronic devices in a heterogeneous network. These type if pairing can be done using a cloud based platform which facilitate pairing between devices of heterogeneous network.
Sub-module to share the content among a circle of connected device.
Content may include media content, contact information, e-books or any other document.
An access control mechanism to avoid sharing of copyrighted content.

This network of connected devices may be used for "cloud-sourcing" of computational requirements.

We also propose a system and platform for these connected electronic devices to share their computational resource (which may be ideal for most of the time) to particulate in cloud computing environment. The device owner may be benefited by sharing their device and can earn money or "computational resource credit" by doing so. These "computational resource credit" may be used later on by the user for his other computational requirements which he can access from cloud. This cloud may be a private, public or hybrid cloud.

The computational requirement of this entire system may be served to a good extend by this collaborative platform.

### Setting up of the group

The first step is to establish a profile in a user's device. As explained before, the profile is created preferably locally by gathering the characteristics of the device, as well as the usual behavior of the user. The profile data are a set of data with the various characteristics of the device. These data are sent to the management center.

Once the profile is received by the management center, the profile data are processed by the management center to determine which group will be the closer one. It is to be noted that the profile data are sent together with an identifier of the device's user. This identifier will be used to recognize the device when it logs on and associate this identifier with a group. In order to determine a particular group, weight factors are applied to the received data. Default weights are applied on the data received from a newly connected device.

After the management center has processed the profile data, said center informs the device about the group in which it has been allocated. At that stage, the user can accept or refuse to join this group. In the latter case, the management center will apply different weight factors to the various profile data and restart the comparison with the other profile data already allocated in a group.

Since the profile data are composed of a various data of different nature, weight factors are applied to each category of the data. As an example, a first weight is applied to the data related to the material, a second weight is applied to the data related to the applications installed, a third weight is applied to the data related to the multimedia usage of the user, and so on for all different categories.

### Operation within the group

Once the device has joined a group, the device can display a list of the members of the group and can carry out various functions related to the communication among the group. Multimedia data can be exchanged between the devices. The resources of the devices can be shared among the group and each device can provide computational capabilities for other devices within the group. The storage capabilities can also be shared, thus creating a cloud of storage devices. The management center can also be cloud-based so that the resources are spread into various physical devices within the cloud.

For security reasons, the cloud-based storage comprises a duplication mechanism so that the data of one member of the group are stored in a plurality of devices. In the same way, a single piece of multimedia content such as a music or picture, is split into a plurality of chunks, each chunk being allocated to different devices on one hand and duplicated to several devices. Each chunk can be encrypted with a key pertaining to the device.

At the retrieval step, the first device, owner of the multimedia content, will request the various devices to transfer the respective chunk. Some devices could be off-line, other could be on-line. This is why the fact that the same chunk is duplicated among a plurality of devices allow the proper retrieval of the data.

By participating in this resource sharing (demand and supply of computational resource), a user can earn "computation resource credit" which he can in-cash or can use in future if he need extra computational resource.

The system of disclosed invention keeps track of "computational resource credit" for all the users and the participating device and can make it public time to time.

The group of devices allows locating a particular hardware needed by the one device's user. The device's user can initiate a search with the details of the requested hardware (e.g. an image acquisition device with resolution, zoom etc) and the other member of the group can respond to this request.

The system of the invention allows seeking and finding devices having some particular characteristics. For example: I list all the electronic devices that i own including, camera, SmartTV, STB, music system, audio/video player, mobile phone, hard drive, Iaptop, Ipad, Iphone, Ipod, tablet etc., any one in my friends network can search and find out that I have such and such device. The management center stores a description of my devices as well as the characteristics of these devices. My friend can request me to borrow that device on availability. The system may maintain a calender for all the available device. Let's assume, I need a camera with high resolution, I search through this platform and get to know who all in my friend circle have camera that suits my requirement and on availability I can borrow my friend's camera.

The search method will be :
- determining at the first device, device characteristics of a third device,
- sending by the first device a request to the management center comprising the third device's characteristics and the first device identification,
- searching by the management center, through the group of devices, at least one third device having similar characteristics,
- sending a message to the third device seeking a response, this message containing an identification of the first user,
- sending a message back by the third device to the management center,
- forwarding the message back to the first user.

The message sent by the management center to the third device can include additional information about the time and date of interest of the third device. The message back can comprise various information (acceptance or denial, other time and date) for informing the first device's owner about the possibility to use the third device.

## Claims

1. Method to create and manage a group of devices by a management center, said method comprising the steps of :
- uploading to the management center from a first device, a device identification and a profile information, said profile information being selected among parameters including device type, computing capabilities, content accessed and generated by said device, activity performed on that device, compatible network type, user behaviour,
- comparing the profile information with profile information already provided by other devices,
- assigning said first device with a group having the most similar profile information.

2. Method of claim 1, wherein it comprises the steps of :
- acquiring multimedia content by the first device,
- uploading said multimedia content to the management center,
- allowing access to the devices belonging to the same group as the first device.

3. Method of claims 1 or 2, wherein it comprises the steps of :
- sending a connection request to the management center by the first device together with the first device identifier,
- determining the group in which the first identifier is allocated,
- sending to the first device, all or part of the identifiers of the other devices of the same group.

4. Method of claim 1, wherein the connection request comprises location information of the first device, the method comprising the steps of :
- determining an area based on the location information of the first device, and
- filtering the devices of the group to keep only those within the area,
- sending to the first device, all or part of the identifiers of the filtered devices.

5. Method of the claims 3 or 4, comprising the steps of :
- communicating with the management center at regular interval by the devices,
- filtering the devices of the group having communicated with the management center within a predefined time.

6. Method of any of the claims 1 to 5, comprising the steps of :
- selecting by the first device, a second device which is member of the group,
- sending a request to the management center to pair with the second device,
- creating a communication channel between the first to the second device.

7. Method of any of the claims 1 to 6, wherein the second device allows all or part of the storage and/or device's capabilities to be shared among the group, and wherein the first device can take advantage of the storage and/or device's capabilities of the first device.

8. Method of claim 7, comprising the step of :
- storing by the first device a multimedia content into the storage of the second device,
- duplicating the storage of the multimedia content to a plurality of second devices.

9. Method of claim 8, wherein it comprises the steps of :
- splitting the multimedia content into a plurality of chunks,
- duplicating the storage of the chunks into the plurality of second devices.

10. Method according to any of the claims 1 to 9, further comprising the steps of :
- determining at the first device, device characteristics of a third device,
- sending by the first device a request to the management center comprising the third device's characteristics and the first device identification,
- searching by the management center, through the group of devices, at least one third device having similar characteristics,
- sending a message to the third device seeking a response, this message containing an identification of the first user,
- sending a message back by the third device to the management center,
- forwarding the message back to the first user.
